# EUROPÄISCHE PATENTSCHRIFT

(11) **EP 3 369 570 B1**
(45) Veröffentlichungstag und Bekanntmachung des Hinweises auf die Patenterteilung: **25.08.2021**
(21) Anmeldenummer: 17180089.9
(22) Anmeldetag: 06.07.2017
(51) Int. Cl.: B33Y 10/00, B33Y 30/00, B33Y 40/00, B29C 64/153, B29C 64/268, B29C 64/364, B29C 64/371, B22F 3/105

(54) **VORRICHTUNG ZUR ADDITIVEN HERSTELLUNG DREIDIMENSIONALER OBJEKTE**
DEVICE FOR ADDITIVE PRODUCTION OF THREE-DIMENSIONAL OBJECTS
DISPOSITIF DE FABRICATION ADDITIVE D'OBJETS TRIDIMENSIONNELS

(30) Priorität: 02.03.2017 DE 102017104351
(43) Veröffentlichungstag der Anmeldung: 05.09.2018
(73) Patentinhaber: CL Schutzrechtsverwaltungs GmbH, 96215 Lichtenfels (DE)
(72) Erfinder: Pilzweger, Florian, 96215 Lichtenfels (DE)
(74) Vertreter: Hafner & Kohl PartmbB

(56) Entgegenhaltungen:
- WO-A1-2016/102970
- DE-A1-102006 052 292
- US-A- 5 359 176
- US-A1- 2011 291 331
- US-A1- 2012 251 378
- US-B1- 6 583 379

## Beschreibung

Die Erfindung betrifft eine Vorrichtung und Verfahren zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial, umfassend eine Strömungseinrichtung, welche zur Ausbildung einer zumindest abschnittsweise entlang wenigstens einer Funktionskomponente der Vorrichtung strömenden ersten Fluidströmung eingerichtet ist, welche mit prozessbedingt entstehenden, insbesondere partikulären, Verunreinigungen beladbar oder beladen ist.

Vorrichtungen zur additiven Herstellung dreidimensionaler Objekte sind dem Grunde nach bekannt. Auch ist es bekannt, dass entsprechende Vorrichtungen eine Strömungseinrichtung umfassen, welche zur Ausbildung einer, insbesondere kreislaufartig, entlang wenigstens einer Funktionskomponente der Vorrichtungen strömenden Fluidströmung eingerichtet ist. Die Fluidströmung dient insbesondere dazu, prozessbedingt entstehende, insbesondere partikuläre, Verunreinigungen - hierbei handelt es sich typischerweise um so genannte Rauch- bzw. Schmauchpartikel - aus einer Prozesskammer der Vorrichtungen zu entfernen. Die von der Strömungseinrichtung ausgebildete Fluidströmung wird entlang ihres Strömungswegs mit prozessbedingt entstehenden Verunreinigungen beladen und enthält, insbesondere nach Austritt aus der Prozesskammer, entsprechende prozessbedingt entstehende Verunreinigungen.

Die mit entsprechenden Verunreinigungen beladene Fluidströmung strömt typischerweise entlang bestimmter Funktionskomponenten der Vorrichtungen. Untersuchungen zeigten, dass sich auf den Funktionskomponenten durch die entlang dieser strömende, mit entsprechenden Verunreinigungen beladene Fluidströmung Ablagerungen bilden können, welche deren jeweilige Funktion beeinträchtigen können. Beispielsweise kann der Strömungsquerschnitt strömungsführender Funktionskomponenten, d. h. z. B. rohrartiger Strömungsführungselemente, durch entsprechende Ablagerungen verringert und die Strömungseigenschaften somit beeinträchtigt werden. Offenbarungen der Oberbegriffe der unabhängigen Ansprüche sind aus den Druckschriften WO2016102970A1, US2011291331 A1, DE102006052292A1, US5359176A sowie US6583379B1 bekannt.

Der Erfindung liegt die Aufgabe zugrunde, eine, insbesondere im Hinblick auf die Verhinderung bzw. Reduzierung entsprechender Ablagerungen an Funktionskomponenten, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Denkbar ist es auch, dass die Vorrichtung als SEBS-Vorrichtung, d. h. als Vorrichtung zur Durchführung selektiver Elektronenstrahlschmelzverfahren (SEBS-Verfahren), ausgebildet ist.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung. Die Beschichtungseinrichtung ist zur Ausbildung selektiv zu belichtender bzw. selektiv zu verfestigender Baumaterialschichten in einer Bauebene der Vorrichtung, in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, eingerichtet und umfasst hierzu typischerweise ein relativ zu der Bauebene bewegbar gelagertes, insbesondere klingenartiges bzw. -förmiges, Beschichtungselement. Die Belichtungseinrichtung ist zur selektiven Belichtung selektiv zu verfestigender Baumaterialschichten in der Bauebene der Vorrichtung eingerichtet und umfasst hierzu typischerweise eine Strahlungserzeugungseinrichtung, welche zur Erzeugung eines Energiestrahls eingerichtet ist, und gegebenenfalls eine Strahlablenkeinrichtung, welche zur Ablenkung des Energiestrahls auf jeweilige selektiv zu belichtende bzw. zu verfestigende Bereiche jeweiliger Baumaterialschichten eingerichtet ist.

Die Vorrichtung umfasst ferner eine Strömungseinrichtung, welche zur Ausbildung einer zumindest abschnittsweise entlang wenigstens einer Funktionskomponente der Vorrichtung strömenden ersten Fluidströmung, d. h. typischerweise einer ersten Gasströmung, eingerichtet ist, welche mit prozessbedingt entstehenden, insbesondere partikulären, Verunreinigungen beladbar oder beladen ist. Unter einem Strömen der Fluidströmung entlang einer Funktionskomponente der Vorrichtung ist, wie sich im Weiteren ergibt, zu verstehen, dass die Fluidströmung zumindest abschnittsweise entlang einer Außen- und/oder Innenfläche einer jeweiligen Funktionskomponente strömt. Zur Ausbildung der Fluidströmung umfasst die Strömungseinrichtung typischerweise eine Strömungserzeugungseinrichtung, d. h. z. B. eine Gebläse- oder Saugeinrichtung. Die Strömungserzeugungseinrichtung ist eingerichtet, eine Fluidströmung mit bestimmten Strömungseigenschaften, d. h. z. B. einer bestimmten Strömungsgeschwindigkeit und einem bestimmten Strömungsprofil, auszubilden. Wie sich im Weiteren ergibt, kann es sich bei einer entsprechenden Funktionskomponente der Vorrichtung um ein, insbesondere rohrartiges bzw. -förmiges, Strömungsführungselement handeln. Ein entsprechendes Strömungsführungselement kann einen Bestandteil einer einen Strömungsweg der Fluidströmung definierenden, von der Fluidströmung durchströmbaren bzw. durchströmten Strömungsführungsstruktur bilden.

Die Fluidströmung dient insbesondere dazu, prozessbedingt entstehende, insbesondere partikuläre, Verunreinigungen ("Verunreinigungen") - hierbei handelt es sich typischerweise um so genannte Rauch- bzw. Schmauchpartikel - aus einer Prozesskammer der Vorrichtung zu entfernen. Die erwähnte Strömungsführungsstruktur ist damit typischerweise einerseits mit einem Strömungseingang der Prozesskammer der Vorrichtung und andererseits mit einem Strömungsausgang der Prozesskammer der Vorrichtung verbunden, sodass die Fluidströmung die Prozesskammer durchströmt, wobei sie mit entsprechenden Verunreinigungen beladen wird. Allgemein gilt also, dass die von der Strömungseinrichtung ausgebildete erste Fluidströmung entlang ihres Strömungswegs mit prozessbedingt entstehenden Verunreinigungen beladen wird und, insbesondere nach Austritt aus der Prozesskammer, entsprechende prozessbedingt entstehende Verunreinigungen enthält.

Um der eingangs beschriebenen Problematik, wonach sich auf den Funktionskomponenten durch die entlang dieser strömende, mit entsprechenden Verunreinigungen beladene erste Fluidströmung Ablagerungen bilden können, welche deren jeweilige Funktion beeinträchtigen können, zu begegnen, ist die Strömungseinrichtung zusätzlich zur Ausbildung einer zweiten Fluidströmung, d. h. typischerweise einer Gasströmung, eingerichtet. Die Strömungseinrichtung ist dabei eingerichtet, die zweite Fluidströmung so auszubilden, dass diese zwischen der ersten Fluidströmung und der wenigstens einen Funktionskomponente der Vorrichtung zumindest abschnittsweise unmittelbar entlang der Oberfläche der wenigstens einen Funktionskomponente der Vorrichtung strömt. Die Strömungseinrichtung ist sonach eingerichtet, eine entsprechende Strömungsführung einer ersten und zweiten Fluidströmung zumindest abschnittsweise entlang jeweiliger Funktionskomponenten der Vorrichtung auszubilden. Selbstverständlich können entsprechende Funktionskomponenten zusätzlich zumindest abschnittsweise mit einer die Ausbildung entsprechender Ablagerungen verhindernden Oberflächenbeschaffenheit versehen sein.

Durch die gezielte "Zwischenschaltung" einer keine bzw. im Vergleich zu der ersten Fluidströmung (deutlich) weniger prozessbedingt entstehende Verunreinigungen enthaltenden zweiten Fluidströmung zwischen die prozessbedingt entstehende Verunreinigungen enthaltende erste Fluidströmung und die Oberfläche der jeweiligen Funktionskomponente ist die Möglichkeit einer Ablagerung entsprechender Verunreinigungen an der jeweiligen Funktionskomponente unterbunden bzw. reduziert. Die zweite Fluidströmung kann als "Schutzströmung" oder "Abschirmströmung" bezeichnet bzw. erachtet werden, da diese die jeweilige Funktionskomponente vor Ablagerungen von in der ersten Fluidströmung enthaltenen Verunreinigungen schützt bzw. gegenüber Ablagerungen von in der ersten Fluidströmung enthaltenen Verunreinigungen abschirmt. Die zweite Fluidströmung kann insofern auch als ein einer jeweiligen Funktionskomponente zugeordneter "Teppich" bzw. "Vorhang" erachtet werden, welcher eine entsprechende Schutz- bzw. Abschirmwirkung gewährleistet.

Die erwähnte Strömungsführungsstruktur ist sonach zumindest abschnittsweise von zwei unterschiedlichen Fluidströmungen durchströmt, wobei die erste Fluidströmung entsprechende Verunreinigungen enthält und die zweite Fluidströmung im Vergleich keine bzw. weniger Verunreinigungen enthält. Dadurch, dass die zweite Fluidströmung, wie erwähnt, unmittelbar entlang der Oberfläche einer jeweiligen Funktionskomponente strömt, verhindert bzw. reduziert diese die Möglichkeit von Ablagerungen an der jeweiligen Funktionskomponente. Um ein Ablagern von Verunreinigungen in der zweiten Fluidströmung zu verhindern bzw. zu reduzieren, kann die zweite Fluidströmung derart strömungstechnisch geführt werden, dass diese die Prozesskammer, d. h. den Ort, in welchem entsprechende Verunreinigungen (im Wesentlichen) entstehen, nicht durchströmt; mithin kann die zweite Fluidströmung erst nach der Prozesskammer mit der ersten Fluidströmung zusammengeführt werden. Es ist jedoch auch möglich, dass auch die zweite Fluidströmung die Prozesskammer zumindest abschnittsweise durchströmt. Die zweite Fluidströmung kann also gegebenenfalls nur entlang bestimmter Abschnitte der Prozesskammer, insbesondere solcher Abschnitte der Prozesskammer, in welchen sich entsprechende Ablagerungen typischerweise bilden (würden), strömen. Eine entsprechende abschnittsweise Strömung der zweiten Fluidströmung kann durch eine gezielte Ein- oder Zuströmung der zweiten Fluidströmung im Bereich jeweiliger Abschnitte der Prozesskammer realisiert werden. Die vorstehenden Ausführungen gelten selbstverständlich analog für alle hierin angesprochenen Funktionskomponenten.

Im Zusammenhang mit der ersten Fluidströmung wurde erwähnt, dass diese zumindest abschnittsweise entlang einer Außen- und/oder Innenfläche einer jeweiligen Funktionskomponente strömen kann. Gleiches gilt, wie erwähnt, für die zweite Fluidströmung. Die Strömungseinrichtung kann sonach zur Ausbildung einer ersten und einer zweiten Fluidströmung, welche - mit der Maßgabe, dass die zweite Fluidströmung zumindest abschnittsweise unmittelbar entlang der Oberfläche der jeweiligen Funktionskomponente strömt - jeweils entlang einer, insbesondere freiliegenden, Außenfläche der wenigstens einen Funktionskomponente der Vorrichtung und/oder entlang einer Innenfläche der wenigstens einen Funktionskomponente der Vorrichtung oder einer weiteren Funktionskomponente der Vorrichtung strömen, eingerichtet sein. Hieraus ergibt sich allgemein, dass eine jeweilige Funktionskomponente wenigstens eine Außenfläche sowie gegebenenfalls wenigstens eine Innenfläche aufweisen kann. Die typischerweise (im Wesentlichen) die äußere geometrische Erscheinung der jeweiligen Funktionskomponente definierende Außenfläche der jeweiligen Funktionskomponente umfasst wenigstens einen Außenflächenabschnitt, entlang welchem die erste und zweite Fluidströmung strömt bzw. strömen kann. Die Innenfläche, sofern vorhanden, der jeweiligen Funktionskomponente umfasst wenigstens einen Innenflächenabschnitt, entlang welchem die erste und zweite Fluidströmung strömen kann. Die Innenfläche der jeweiligen Funktionskomponente kann einen von der ersten und zweiten Fluidströmung zumindest abschnittsweise durchströmbaren oder durchströmten Innenraum begrenzen.

Die Eigenschaften, d. h. z. B. die chemischen und/oder physikalischen Eigenschaften wie auch die strömungstechnischen Eigenschaften der ersten und/oder zweiten Fluidströmung können in Abhängigkeit der chemischen und/oder physikalischen Eigenschaften der möglichen Ablagerungen, d. h. insbesondere in Abhängigkeit der chemischen und/oder physikalischen Eigenschaften der in der ersten Fluidströmung enthaltenen Verunreinigungen, gewählt sein. Beispielsweise kann die Ablagerung von Verunreinigungen erster chemischer und/oder physikalischer Eigenschaften durch bestimmte erste Strömungseigenschaften der zweiten Fluidströmung verhindert werden, während die Ablagerung von Verunreinigungen zweiter chemischer und/oder physikalischer Eigenschaften durch bestimmte zweite Strömungseigenschaften der zweiten Fluidströmung verhindert werden.

Eine jeweilige Funktionskomponente kann zumindest abschnittsweise, insbesondere vollständig, eine flächige geometrische Gestalt, oder zumindest abschnittsweise, insbesondere vollständig, eine zylinderartige oder -förmige geometrische Gestalt, oder zumindest abschnittsweise, insbesondere vollständig, eine hohlzylinderartige oder - förmige, geometrische Gestalt aufweisen.

Konkret kann es sich bei einer entsprechenden Funktionskomponente der Vorrichtung beispielsweise um ein einen Strömungsinnenraum umfassendes, insbesondere rohrartiges oder -förmiges, auch als Strömungsrohr zu bezeichnendes Strömungsführungselement, wobei der Strömungsinnenraum zumindest abschnittsweise von der ersten und zweiten Fluidströmung durchströmbar ist, oder um ein eine Strömungsfläche umfassendes optisches Element, d. h. z. B. einer optischen Linse, oder ein Schutzglas einer Schutzglaseinrichtung, über welches ein Energiestrahl in die Prozesskammer eingebracht wird, einer optischen Einrichtung, wobei die Strömungsfläche von der ersten und zweiten Fluidströmung überströmbar ist, oder um eine die Prozesskammer der Vorrichtung begrenzende Prozesskammerwandung, wobei die Prozesskammerwandung zumindest abschnittsweise von der ersten und zweiten Fluidströmung überströmbar ist, handeln. Eine Funktionskomponente der Vorrichtung kann allgemein auch ein der Vorrichtung zuordenbares oder zugeordnete Peripherieeinrichtung, wie z. B. eine Filtereinrichtung, eine Baumaterialspeichereinrichtung, eine Auspackeinrichtung, etc., sein. Im Allgemeinen ist jede Funktionskomponente angesprochen, an welcher sich entsprechende Ablagerungen bilden können.

Die erste Fluidströmung und die zweite Fluidströmung unterscheiden sich in wenigstens einem die Strömungseigenschaften der jeweiligen Fluidströmung betreffenden Strömungsparameter, insbesondere der Strömungsgeschwindigkeit. Durch die unterschiedlichen Strömungsparameter kann die Möglichkeit eines Vermischens der ersten und zweiten Fluidströmung reduziert werden. Die erste und die zweite Fluidströmung strömen hinsichtlich ihrer Strömungsrichtung parallel und vermischen sich möglichst wenig. Derart ist die beschriebene Schutz- bzw. Abschirmwirkung der zweiten Fluidströmung besonders zuverlässig gegeben.

Die erste Fluidströmung kann beispielsweise (im Wesentlichen) linear strömen, die zweite Fluidströmung kann die erste Fluidströmung zumindest abschnittsweise, insbesondere vollständig, umgebend umströmen. Insbesondere kann die zweite Fluidströmung helixartig bzw. -förmig ("helixartig") strömen - hierunter kann auch eine spiralartig bzw. -förmig strömende zweite Fluidströmung zu verstehen sein; eine helixartig strömende zweite Fluidströmung kann die erste Fluidströmung sonach zumindest abschnittsweise helixartig umgebend umströmen. Die Strömungsrichtung der ersten und zweiten Fluidströmung ist in allen Fällen typischerweise gleich. Eine helixartig strömende zweite Fluidströmung kann z. B. durch eine geeignete, d. h. insbesondere eine winklig geneigte, Anordnung von Düsenelemente realisiert sein. Für das Beispiel einer eine hohlzylinderartige geometrische Gestalt aufweisenden Funktionskomponente, wie z. B. einem rohrartigen Strömungsführungselement, kann die erste Fluidströmung z. B. zentrisch durch die Funktionskomponente strömen, während die zweite Fluidströmung zumindest abschnittsweise helixartig, die erste Fluidströmung umgebend zwischen der ersten Fluidströmung und der durch deren Innenumfang definierten Oberfläche der Funktionskomponente strömen.

Die erste Fluidströmung und die zweite Fluidströmung unterscheiden sich auch in wenigstens einem die physikalischen Eigenschaften der jeweiligen Fluidströmung betreffenden physikalischen Parameter, insbesondere der Dichte. Auch durch die unterschiedlichen physikalischen Parameter kann die Möglichkeit eines Vermischens der ersten und zweiten Fluidströmung reduziert werden. Wie erwähnt, strömen die erste und die zweite Fluidströmung hinsichtlich ihrer Strömungsrichtung parallel und vermischen sich möglichst wenig. Derart ist die beschriebene Schutz- bzw. Abschirmwirkung der zweiten Fluidströmung besonders zuverlässig gegeben. Für das Beispiel einer planen Oberfläche einer Funktionskomponente kann die zweite Fluidströmung z. B. eine höhere Dichte als die erste Fluidströmung aufweisen, weshalb die zweite Fluidströmung bevorzugt unmittelbar entlang der Oberfläche der jeweiligen Funktionskomponente strömt.

Der Strömungseinrichtung kann eine, mehrere Düsenelemente umfassende Düseneinrichtung zugehörig sein. Wenigstens ein erstes Düsenelement oder wenigstens eine Gruppe erster Düsenelemente kann zur Ausbildung der ersten Fluidströmung eingerichtet sind, und wenigstens ein zweites Düsenelement oder wenigstens eine Gruppe zweiter Düsenelemente zur Ausbildung der zweiten Fluidströmung eingerichtet sind. Durch Anordnung und Ausrichtung der jeweiligen Düsenelemente bzw. Düsenelementgruppen, welche sich selbstverständlich auch in jeweiligen Düsen(querschnitts)geometrien unterscheiden können, können gezielt zwei parallel strömende Fluidströmungen erzeugt werden. Anordnung, Ausrichtung und Düsen(querschnitts)geometrien jeweiliger Düsenelemente können in Abhängigkeit der chemischen und/oder physikalischen Eigenschaften der in der ersten Fluidströmung enthaltenen Verunreinigungen gewählt sein. Durch eine geeignete, d. h. insbesondere winklig geneigte, Anordnung jeweiliger Düsenelemente bzw. Düsenelementgruppen lassen sich unterschiedliche Strömungen der ersten und zweiten Fluidströmung, wie erwähnt, insbesondere eine helixartig strömende zweite Fluidströmung, ausbilden.

Wie erwähnt, kann die Strömungseinrichtung zur Ausbildung einer kreislaufartig entlang wenigstens einer Funktionskomponente der Vorrichtung strömenden Fluidströmung eingerichtet sein. Dabei können jeweilige erste und zweite Düsenelemente bzw. jeweilige erste und zweite Düsenelementgruppen an gleichen oder unterschiedlichen Abschnitten des durch die kreislaufartig strömende Fluidströmung gebildeten Strömungskreislaufs angeordnet oder ausgebildet sein. Für das Beispiel einer Prozesskammer als entsprechende Funktionskomponente können die die zweiten Fluidströmung ausbildenden Düsenelemente bzw. Düsenelementgruppen können zumindest abschnittsweise in der Prozesskammer angeordnet sein. Derart ist es möglich, dass die zweite Fluidströmung in der Prozesskammer mit der ersten Fluidströmung zusammengeführt wird. Die die zweite Fluidströmung ausbildenden Düsenelemente bzw. Düsenelementgruppen können alternativ auch vor oder nach der Prozesskammer angeordnet sein. Derart ist es möglich, dass die zweite Fluidströmung vor oder nach der Prozesskammer mit der ersten Fluidströmung zusammengeführt wird.

Die erste und die zweite Fluidströmung sind typischerweise jeweils inert. Mithin können die erste und die zweite Fluidströmung jeweils durch ein inertes Strömungsfluid bzw. - gas ausgebildet sein. Bei einem entsprechenden Strömungsfluid kann es sich z. B. um Argon, Kohlenstoffdioxid oder Stickstoff handeln.

Die Erfindung betrifft weiterhin ein Verfahren gemäß Anspruch 13 zum Betrieb einer Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial, wobei eine über eine Strömungseinrichtung ausgebildete erste Fluidströmung, insbesondere kreislaufartig, entlang wenigstens einer Funktionskomponente der Vorrichtung strömt, wobei die erste Fluidströmung mit prozessbedingt entstehenden, insbesondere partikulären, Verunreinigungen beladen wird. Das Verfahren zeichnet sich dadurch aus, dass über die Strömungseinrichtung zusätzlich eine zweite Fluidströmung ausgebildet wird, wobei die zweite Fluidströmung zwischen der ersten Fluidströmung und der wenigstens einen Funktionskomponente der Vorrichtung unmittelbar entlang der Oberfläche der wenigstens einen Funktionskomponente der Vorrichtung strömt. Sämtliche Ausführungen im Zusammenhang mit der Vorrichtung gelten analog für dieses Verfahren.

Uberdies betrifft die Erfindung ein Verfahren gemäß Anspruch 14 zum Schutz einer Funktionskomponente einer wie beschriebenen Vorrichtung, vor an dieser, insbesondere im Bereich einer Oberfläche, anhaftenden, insbesondere partikulären, Verunreinigungen, wobei eine erste Fluidströmung, insbesondere kreislaufartig, entlang der Funktionskomponente strömt, wobei die erste Fluidströmung mit, insbesondere partikulären, Verunreinigungen beladen ist. Das Verfahren zeichnet sich dadurch aus, dass zusätzlich eine zweite Fluidströmung ausgebildet wird, wobei die zweite Fluidströmung zwischen der ersten Fluidströmung und der wenigstens einen Funktionskomponente unmittelbar entlang der Oberfläche der wenigstens einen Funktionskomponente strömt. Sämtliche Ausführungen im Zusammenhang mit der Vorrichtung gelten analog auch für dieses Verfahren.

Die Erfindung ist anhand von Ausführungsbeispielen in den Zeichnungsfiguren näher erläutert. Dabei zeigt:
- Fig. 1, 2: je eine Prinzipdarstellung einer Vorrichtung gemäß einem Ausführungsbeispiel;
- Fig. 3 - 6: je eine vergrößerte Darstellung der in Fig. 1 gezeigten Einzelheit A.

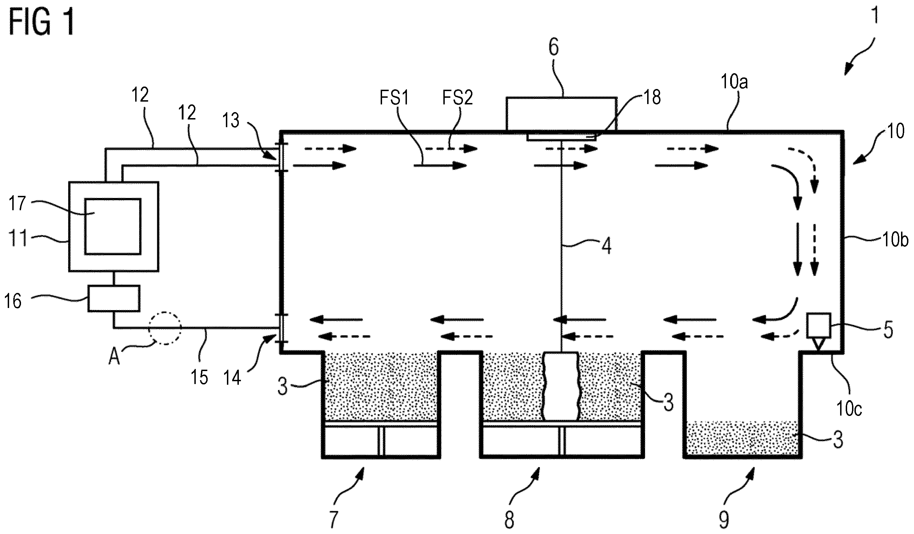

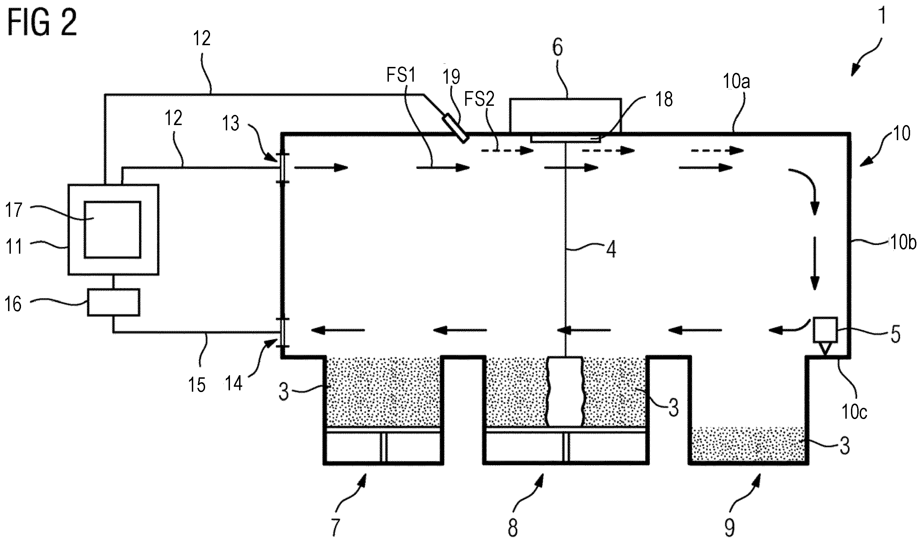

Fig. 1 - Analoges gilt für Fig. 2 - zeigt eine Prinzipdarstellung einer Vorrichtung 1 gemäß einem Ausführungsbeispiel. Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Energiestrahls 4, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann z. B. als Laser-CUSING®-Vorrichtung, d. h. als Vorrichtung zur Durchführung selektiver Laserschmelzverfahren (SLM-Verfahren), ausgebildet sein.

Die Vorrichtung 1 umfasst die zur Durchführung additiver Bauvorgänge erforderlichen Funktionskomponenten; in Fig. 1 ist beispielsweise eine Beschichtungseinrichtung 5 und eine Belichtungseinrichtung 6 gezeigt. Die Beschichtungseinrichtung 5 ist zur Ausbildung selektiv zu belichtender bzw. selektiv zu verfestigender Baumaterialschichten in einer Bauebene bzw. einem Baufeld der Vorrichtung 1 eingerichtet und umfasst hierzu ein relativ zu einer Bauebene der Vorrichtung 1 bewegbar gelagertes, insbesondere klingenartiges bzw. -förmiges, Beschichtungselement (nicht näher bezeichnet). Die Belichtungseinrichtung 6 ist zur selektiven Belichtung selektiv zu verfestigender Baumaterialschichten in der Bauebene der Vorrichtung 1 eingerichtet und umfasst hierfür eine Strahlerzeugungseinrichtung (nicht gezeigt), welche zur Erzeugung des Energiestrahls 4 eingerichtet ist, gegebenenfalls eine Strahlablenkeinrichtung (nicht gezeigt), welche zur Ablenkung des von der Strahlerzeugungseinrichtung erzeugten Energiestrahls 4 auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc.

In Fig. 1 ist ferner ein Dosiermodul 7, ein Baumodul 8 und ein Überlaufmodul 9 dargestellt, welche an einen unteren Bereich einer inertisierbaren Prozesskammer 10 der Vorrichtung 1 angedockt sind. Die genannten Module können auch einen unteren Bereich der Prozesskammer 10 der Vorrichtung 1 bilden.

Die Vorrichtung 1 umfasst ferner eine Strömungseinrichtung 11. Die Strömungseinrichtung 11 ist zur Ausbildung einer, insbesondere kreislaufartig, entlang wenigstens einer Funktionskomponente der Vorrichtung 1 strömenden, inerten ersten Fluidströmung FS1, d. h. einer ersten Inertgasströmung, eingerichtet, welche mit prozessbedingt entstehenden, insbesondere partikulären, Verunreinigungen beladbar oder beladen ist. Die erste Fluidströmung FS1 dient dazu, prozessbedingt entstehende, insbesondere partikuläre, Verunreinigungen - hierbei handelt es sich typischerweise um so genannte Rauch- bzw. Schmauchpartikel - aus der Prozesskammer 10 der Vorrichtung 1 zu entfernen. Die erste Fluidströmung FS1 wird also entlang ihres Strömungswegs mit prozessbedingt entstehenden Verunreinigungen beladen und enthält, insbesondere nach Austritt aus der Prozesskammer 10, entsprechende prozessbedingt entstehende Verunreinigungen.

Die Strömungseinrichtung 11 umfasst zur Ausbildung der ersten Fluidströmung FS1 eine Strömungserzeugungseinrichtung 17, d. h. z. B. eine Gebläse- oder Saugeinrichtung. Die Strömungserzeugungseinrichtung 17 ist eingerichtet, eine Fluidströmung mit bestimmten Strömungseigenschaften, d. h. z. B. einer bestimmten Strömungsgeschwindigkeit und einem bestimmten Strömungsprofil, auszubilden.

Die Strömung der ersten Fluidströmung FS1 innerhalb der Prozesskammer 10 ist durch die durchgezogen dargestellten Pfeile veranschaulicht. Unter einem Strömen der ersten Fluidströmung FS1 entlang einer Funktionskomponente der Vorrichtung 1 ist zu verstehen, dass die erste Fluidströmung FS1 zumindest abschnittsweise entlang einer Außen- und/oder Innenfläche einer jeweiligen Funktionskomponente strömt.

In dem in Fig. 1 gezeigten Ausführungsbeispiel strömt die erste Fluidströmung FS1 ausgehend von der Strömungseinrichtung 11 zunächst durch rohrartige Strömungsführungselemente 12 bis zu einem prozesskammerseitigen Einströmbereich 13, über welchen die erste Fluidströmung FS1 in die Prozesskammer 10 einströmt. Die erste Fluidströmung FS1 strömt sodann innerhalb der Prozesskammer 10 entlang jeweiliger die Prozesskammer 10 begrenzender Prozesskammerwandungen 10a, 10b, 10c, wobei die Prozesskammerwandung 10a eine Decke der Prozesskammer 10, die Prozesskammerwandung 10b eine Seitenwandung der Prozesskammer 10 und die Prozesskammerwandung 10c einen Boden der Prozesskammer 10 bildet, bis zu einem prozesskammerseitigen Ausströmbereich 14, über welchen die erste Fluidströmung FS1 aus der Prozesskammer 10 ausströmt. Die erste Fluidströmung FS1 strömt sodann durch ein weiteres rohrartiges Strömungsführungselement 15 über eine Filtereinrichtung 16., welche zur Filterung entsprechender Verunreinigungen aus der ersten Fluidströmung FS1 eingerichtet ist. zurück zu der Strömungseinrichtung 11. Jeweilige Strömungsführungselemente 12, 15 bilden einen Bestandteil einer einen Strömungsweg der ersten Fluidströmung FS1 definierenden Strömungsführungsstruktur.

Wie sich im Weiteren ergibt, handelt es sich in dem in Fig. 1 gezeigten Ausführungsbeispiel bei entsprechenden Funktionskomponenten insbesondere um jeweilige Strömungsführungselemente 12, 15, Prozesskammerwandungen 10a, 10b 10c und ein einen Bestandteil einer Schutzglaseinrichtung (nicht bezeichnet) bildendes Schutzglas 18, über welches ein Eintritt des Energiestrahls 4 in die Prozesskammer 10 erfolgt.

Um der Problematik, wonach sich auf den Funktionskomponenten durch die entlang dieser strömende, mit entsprechenden Verunreinigungen beladene erste Fluidströmung FS1 Ablagerungen bilden können, welche deren jeweilige Funktion beeinträchtigen können, zu begegnen, ist die Strömungseinrichtung 11 zusätzlich zur Ausbildung einer durch die strichliert dargestellten Pfeile veranschaulichten, inerten zweiten Fluidströmung FS2, d. h. typischerweise einer zweiten Inertgasströmung, eingerichtet. Die Strömungseinrichtung 11 ist dabei eingerichtet, die zweite Fluidströmung FS2 so auszubilden, dass diese zwischen der ersten Fluidströmung FS1 und der jeweiligen Funktionskomponente unmittelbar entlang der Oberfläche der jeweiligen Funktionskomponente strömt. Die zweite Fluidströmung FS2 kann als "Schutzströmung" oder "Abschirmströmung" bezeichnet bzw. erachtet werden, da diese die jeweilige Funktionskomponente vor Ablagerungen von in der ersten Fluidströmung FS1 enthaltenen Verunreinigungen schützt bzw. gegenüber Ablagerungen von in der ersten Fluidströmung FS1 enthaltenen Verunreinigungen abschirmt. Die zweite Fluidströmung FS2 kann insofern als ein einer jeweiligen Funktionskomponente zugeordneter "Teppich" bzw. "Vorhang" erachtet werden, welcher eine entsprechende Schutz- bzw. Abschirmwirkung gewährleistet.

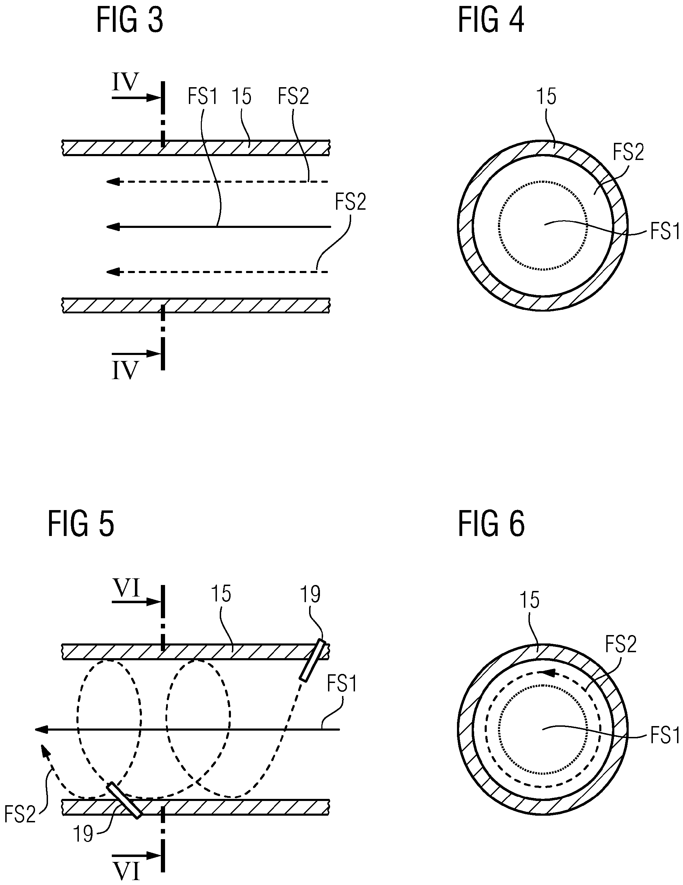

Für das in Fig. 1 gezeigte Ausführungsbeispiel gilt sonach, dass die zweite Fluidströmung FS2 zwischen der ersten Fluidströmung FS1 und den die Strömungsführungselemente 12, 15 begrenzenden Strömungsführungselementwandungen strömt (vgl. Fig. 2, 3), zwischen der ersten Fluidströmung FS1 und den die Prozesskammer 10 begrenzenden Prozesskammerwandungen 10a, 10b, 10c sowie im Bereich der Schutzglaseinrichtung zwischen der ersten Fluidströmung FS1 und dem Schutzglas 18 strömt.

Die erwähnte Strömungsführungsstruktur ist sonach von zwei unterschiedlichen Fluidströmungen FS1, FS2 durchströmt, wobei die erste Fluidströmung FS1 (den Hauptanteil) entsprechende(r) Verunreinigungen enthält und die zweite Fluidströmung FS2 im Vergleich keine bzw. weniger Verunreinigungen enthält. Dadurch, dass die zweite Fluidströmung FS2 unmittelbar entlang der Oberflächen jeweiliger Funktionskomponenten strömt, verhindert bzw. reduziert diese die Möglichkeit von Ablagerungen an der jeweiligen Funktionskomponente.

Für das in Fig. 2 gezeigte Ausführungsbeispiel gilt, dass die zweite Fluidströmung nur abschnittsweise entlang bestimmter Abschnitte wenigstens einer der die Prozesskammer 10 begrenzenden Prozesskammerwandungen 10a, 10b, 10c- in dem in Fig. 2 gezeigten Ausführungsbeispiel beispielhaft nur abschnittsweise im Bereich des Schutzglases 18 der Prozesskammerwandung 10a - strömt.

Der Strömungseinrichtung 11 kann eine, mehrere Düsenelemente 19 umfassende Düseneinrichtung (nicht bezeichnet) zugehörig sein. Die Düseneinrichtung ist typischerweise in dem prozesskammerseitigen Einströmbereich 13 angeordnet oder ausgebildet. Ein erstes Düsenelement 19 oder eine Gruppe erster Düsenelemente kann zur Ausbildung der ersten Fluidströmung FS1 eingerichtet sein, ein zweites Düsenelement 19 oder eine Gruppe zweiter Düsenelemente zur Ausbildung der zweiten Fluidströmung FS2 eingerichtet sein. Durch Anordnung und Ausrichtung der jeweiligen Düsenelemente bzw. Düsenelementgruppen, welche sich in jeweiligen Düsen(querschnitts)geometrien unterscheiden können, können gezielt zwei parallel strömende Fluidströmungen FS1, FS2 erzeugt werden.

Entsprechende Düsenelemente 19 sind in Fig. 2 gezeigt. Die Düsenelemente 19 ermöglichen eine gezielte lokale Ein- bzw. Zuströmung der zweiten Fluidströmung FS2.

Für alle Ausführungsbeispiele gilt, dass sich die erste Fluidströmung FS1 und die zweite Fluidströmung FS2 sich in wenigstens einem die Strömungseigenschaften der jeweiligen Fluidströmung FS1, FS2 betreffenden Strömungsparameter, insbesondere der Strömungsgeschwindigkeit, unterscheiden. Durch die unterschiedlichen Strömungsparameter kann die Möglichkeit eines Vermischens der ersten und zweiten Fluidströmung FS1, FS2 reduziert werden. Die erste und die zweite Fluidströmung FS1, FS2 strömen - wie in den Fig. 3 - 6 angedeutet - parallel nebeneinander und vermischen sich möglichst wenig.

Die erste Fluidströmung FS1 und die zweite Fluidströmung FS2 unterscheiden sich auch in wenigstens einem die physikalischen Eigenschaften der jeweiligen Fluidströmung FS1, FS2 betreffenden physikalischen Parameter, insbesondere der Dichte. Auch durch die unterschiedlichen physikalischen Parameter kann die Möglichkeit eines Vermischens der ersten und zweiten Fluidströmung FS1, FS2 reduziert werden. Wie erwähnt, strömen die erste und die zweite Fluidströmung FS1, FS2 parallel nebeneinander und vermischen sich möglichst wenig.

Die Fig. 3, 4 zeigen eine vergrößerte Darstellung der in Fig. 1 gezeigten Einzelheit A. Die Einzelheit A betrifft einen Abschnitt des Strömungsführungselements 15, welches in Fig. 3 in einer längsgeschnittenen Ansicht und in Fig. 4 in einer quergeschnittenen Ansicht dargestellt ist.

Anhand der Fig. 3, 4 ist ersichtlich, dass die erste Fluidströmung FS1 zentrisch durch das Strömungsführungselement 15 strömt. Die zweite Fluidströmung FS2 strömt zwischen der ersten Fluidströmung FS1 und den den Strömungsraum des Strömungsführungselements 15 begrenzenden Strömungsführungselementwandungen unmittelbar entlang dieser. Die erste Fluidströmung FS1 weist einen scheibenförmigen Strömungsquerschnitt, die zweite Fluidströmung FS2 einen diesen umgebenden ringartigen Strömungsquerschnitt auf. Die Strömungsrichtungen der ersten und zweiten Fluidströmung FS1, FS2 sind gleich.

Die Fig. 5, 6 zeigen eine vergrößerte Darstellung der in Fig. 1 gezeigten Einzelheit A in einer Variante. Die Einzelheit A betrifft wiederum einen Abschnitt des Strömungsführungselements 15, welches in Fig. 5 in einer längsgeschnittenen Ansicht und in Fig. 6 in einer quergeschnittenen Ansicht dargestellt ist.

Anhand der Fig. 5, 6 ist ersichtlich, dass die erste Fluidströmung FS1 zentrisch durch das Strömungsführungselement 15 strömt. Die zweite Fluidströmung FS2 strömt zwischen der ersten Fluidströmung FS1 und den den Strömungsraum des Strömungsführungselements 15 begrenzenden Strömungsführungselementwandungen unmittelbar entlang dieser. Die erste Fluidströmung FS1 weist einen scheibenförmigen Strömungsquerschnitt auf, die zweite Fluidströmung FS2 umströmt die erste Fluidströmung FS1 helixartig bzw. -förmig. Die Ausbildung einer helixartigen Strömung der zweiten Fluidströmung FS2 ist z. B. durch eine geeignete, d. h. insbesondere eine bezüglich der Zentralachse des Strömungsführungselements 15 winklig geneigte, Anordnung entsprechender Düsenelemente 19 möglich. Die Strömungsrichtungen der ersten und zweiten Fluidströmung FS1, FS2 sind gleich.

Mit der in den Fig. 1, 2 gezeigten Vorrichtung 1 lässt sich ein Verfahren zum Betrieb einer Vorrichtung 1 zur additiven Herstellung dreidimensionaler Objekte 2 durch sukzessives schichtweises selektives Belichten und damit einhergehendes sukzessives schichtweises selektives Verfestigen von Baumaterialschichten aus einem vermittels eines Energiestrahls 4 verfestigbaren Baumaterial 3 implementieren. Verfahrensgemäß strömt eine über die Strömungseinrichtung 11 ausgebildete erste Fluidströmung FS1 entlang wenigstens einer Funktionskomponente der Vorrichtung 1, wobei die erste Fluidströmung FS1 mit prozessbedingt entstehenden, insbesondere partikulären, Verunreinigungen beladen wird. Über die Strömungseinrichtung 11 wird zusätzlich eine zweite Fluidströmung FS2 ausgebildet, wobei die zweite Fluidströmung FS2 zwischen der ersten Fluidströmung FS1 und der wenigstens einen Funktionskomponente der Vorrichtung 1 unmittelbar entlang der Oberfläche der wenigstens einen Funktionskomponente der Vorrichtung 1 strömt.

Weiterhin lässt sich ein Verfahren zum Schutz einer Funktionskomponente, insbesondere einer Funktionskomponente einer wie beschriebenen Vorrichtung 1, vor an dieser, insbesondere im Bereich einer Oberfläche, anhaftenden, insbesondere partikulären, Verunreinigungen, wobei eine erste Fluidströmung FS1, insbesondere kreislaufartig, entlang der Funktionskomponente strömt, wobei die erste Fluidströmung FS1 mit, insbesondere partikulären, Verunreinigungen beladen ist, implementieren. Das Verfahren zeichnet sich dadurch aus, dass zusätzlich eine zweite Fluidströmung FS2 ausgebildet wird, wobei die zweite Fluidströmung FS2 zwischen der ersten Fluidströmung FS1 und der wenigstens einen Funktionskomponente unmittelbar entlang der Oberfläche der wenigstens einen Funktionskomponente strömt.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls (4) verfestigbaren Baumaterial (3), umfassend eine Strömungseinrichtung (11), welche zur Ausbildung einer zumindest abschnittsweise entlang wenigstens einer Funktionskomponente der Vorrichtung (1) strömenden ersten Fluidströmung (FS1) eingerichtet ist, welche mit prozessbedingt entstehenden, insbesondere partikulären, Verunreinigungen beladbar oder beladen ist, wobei die Strömungseinrichtung (11) zur Ausbildung einer zweiten Fluidströmung (FS2) eingerichtet ist, wobei die zweite Fluidströmung (FS2) zwischen der ersten Fluidströmung (FS1) und der wenigstens einen Funktionskomponente der Vorrichtung (1) zumindest abschnittsweise unmittelbar entlang der Oberfläche der wenigstens einen Funktionskomponente der Vorrichtung (1) strömt, **dadurch gekennzeichnet, daß**
- sich die erste Fluidströmung (FS1) und die zweite Fluidströmung (FS2)
-- in wenigstens einem die Strömungseigenschaften der jeweiligen Fluidströmung (FS1, FS2) betreffenden Strömungsparameter und/oder
-- in wenigstens einem die physikalischen Eigenschaften der jeweiligen Fluidströmung (FS1, FS2) betreffenden physikalischen Parameter unterscheiden und
- die erste und die zweite Fluidströmung (FS1, FS2) parallel nebeneinander strömen und aufgrund der unterschiedlichen Strömungsparameter und/oder aufgrund der unterschiedlichen physikalischen Parameter die Möglichkeit des Vermischens der Fluidströme (FS1, FS2) reduzierbar ist oder reduziert wird.

2. Vorrichtung nach Anspruch 1, **dadurch gekennzeichnet, dass** die Strömungseinrichtung (11) zur Ausbildung einer ersten und zweiten Fluidströmung (FS1, FS2), welche entlang einer, insbesondere freiliegenden, Außenfläche der wenigstens einen Funktionskomponente der Vorrichtung (1) und/oder entlang einer Innenfläche der wenigstens einen Funktionskomponente der Vorrichtung (1) oder einer weiteren Funktionskomponente der Vorrichtung (1) strömen, eingerichtet ist.

3. Vorrichtung nach Anspruch 2, **dadurch gekennzeichnet, dass** die Funktionskomponente zumindest abschnittsweise, insbesondere vollständig, eine flächige geometrische Gestalt, oder zumindest abschnittsweise, insbesondere vollständig, eine zylinderartige oder -förmige geometrische Gestalt, oder zumindest abschnittsweise, insbesondere vollständig, eine hohlzylinderartige oder -förmige, geometrische Gestalt aufweist.

4. Vorrichtung nach einem der vorhergehenden Ansprüche, **dadurch gekennzeichnet, dass** die wenigstens eine oder wenigstens eine Funktionskomponente der Vorrichtung (1) ein einen Strömungsinnenraum umfassendes, insbesondere rohrartiges oder -förmiges, Strömungsführungselement (12, 15) ist, wobei der Strömungsinnenraum von der Fluidströmung (FS1, FS2) durchströmbar ist.

5. Vorrichtung nach einem der vorhergehenden Ansprüche, **dadurch gekennzeichnet, dass** die wenigstens eine oder wenigstens eine Funktionskomponente der Vorrichtung (1) eine Strömungsfläche umfassendes optisches Element einer optischen Einrichtung ist, wobei die Strömungsfläche von der Fluidströmung (FS1, FS2) überströmbar ist.

6. Vorrichtung nach einem der vorhergehenden Ansprüche, **dadurch gekennzeichnet, dass** die wenigstens eine oder wenigstens eine Funktionskomponente der Vorrichtung (1) eine eine Prozesskammer (10) der Vorrichtung (1) begrenzende Prozesskammerwandung (10a - 10c) ist.

7. Vorrichtung nach einem der vorhergehenden Ansprüche, **dadurch gekennzeichnet, dass** sich die erste Fluidströmung (FS1) und die zweite Fluidströmung (FS2) in wenigstens einer die Strömungseigenschaften der jeweiligen Fluidströmung (FS1, FS2) betreffenden Strömungsgeschwindigkeit unterscheiden.

8. Vorrichtung nach einem der vorhergehenden Ansprüche, **dadurch gekennzeichnet, dass** sich die erste Fluidströmung (FS1) und die zweite Fluidströmung (FS2) in wenigstens einer die physikalischen Eigenschaften der jeweiligen Fluidströmung (FS1, FS2) betreffenden Dichte unterscheiden.

9. Vorrichtung nach einem der vorhergehenden Ansprüche, **dadurch gekennzeichnet, dass** die Strömungseinrichtung (11) eingerichtet ist, eine helixartig oder spiralartig unmittelbar entlang der Oberfläche der wenigstens einen Funktionskomponente der Vorrichtung (1) strömende zweite Fluidströmung (FS2) auszubilden.

10. Vorrichtung nach einem der vorhergehenden Ansprüche, **gekennzeichnet durch** eine der Strömungseinrichtung (11) zugehörige, mehrere Düsenelemente umfassende Düseneinrichtung, wobei wenigstens ein erstes Düsenelement oder wenigstens eine Gruppe erster Düsenelemente zur Ausbildung der ersten Fluidströmung (FS1) eingerichtet sind, und wenigstens ein zweites Düsenelement oder wenigstens eine Gruppe zweiter Düsenelemente zur Ausbildung der zweiten Fluidströmung (FS2) eingerichtet sind.

11. Vorrichtung nach Anspruch 10, **dadurch gekennzeichnet, dass** die Strömungseinrichtung (11) zur Ausbildung einer kreislaufartig entlang wenigstens einer Funktionskomponente der Vorrichtung (1) strömenden Fluidströmung eingerichtet ist, wobei jeweilige erste und zweite Düsenelement bzw. jeweilige erste und zweite Düsenelementgruppen an gleichen oder unterschiedlichen Abschnitten des durch die kreislaufartig strömende Fluidströmung gebildeten Strömungskreislaufs angeordnet oder ausgebildet sind.

12. Vorrichtung nach einem der vorhergehenden Ansprüche, **dadurch gekennzeichnet, dass** die erste und die zweite Fluidströmung (FS1, FS2) inert sind.

13. Verfahren zum Betrieb einer Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls (4) verfestigbaren Baumaterial (3), wobei eine über eine Strömungseinrichtung (11) ausgebildete erste Fluidströmung (FS1), insbesondere kreislaufartig, entlang wenigstens einer Funktionskomponente der Vorrichtung (1) strömt, wobei die erste Fluidströmung (FS1) mit prozessbedingt entstehenden, insbesondere partikulären, Verunreinigungen beladen wird, wobei über die Strömungseinrichtung (11) zusätzlich eine zweite Fluidströmung (FS2) ausgebildet wird, wobei die zweite Fluidströmung (FS2) zwischen der ersten Fluidströmung (FS1) und der wenigstens einen Funktionskomponente der Vorrichtung (1) unmittelbar entlang der Oberfläche der wenigstens einen Funktionskomponente der Vorrichtung (1) strömt, **dadurch gekennzeichnet, daß**
- sich die erste Fluidströmung (FS1) und die zweite Fluidströmung (FS2)
-- in wenigstens einem die Strömungseigenschaften der jeweiligen Fluidströmung (FS1, FS2) betreffenden Strömungsparameter und/oder
-- in wenigstens einem die physikalischen Eigenschaften der jeweiligen Fluidströmung (FS1, FS2) betreffenden physikalischen Parameter unterscheiden und
- die erste und die zweite Fluidströmung (FS1, FS2) parallel nebeneinander strömen und aufgrund der unterschiedlichen Strömungsparameter und/oder aufgrund der unterschiedlichen physikalischen Parameter die Möglichkeit des Vermischens der Fluidströme (FS1, FS2) reduziert wird.

14. Verfahren zum Schutz einer Funktionskomponente einer Vorrichtung (1) nach einem der Ansprüche 1 bis 12, vor an dieser, insbesondere im Bereich einer Oberfläche, anhaftenden, insbesondere partikulären, Verunreinigungen, wobei eine erste Fluidströmung (FS1), insbesondere kreislaufartig, entlang der Funktionskomponente strömt, wobei die erste Fluidströmung (FS1) mit, insbesondere partikulären, Verunreinigungen beladen ist, wobei zusätzlich eine zweite Fluidströmung (FS2) ausgebildet wird, wobei die zweite Fluidströmung (FS2) zwischen der ersten Fluidströmung (FS1) und der wenigstens einen Funktionskomponente unmittelbar entlang der Oberfläche der wenigstens einen Funktionskomponente strömt, **dadurch gekennzeichnet, daß**
- sich die erste Fluidströmung (FS1) und die zweite Fluidströmung (FS2)
-- in wenigstens einem die Strömungseigenschaften der jeweiligen Fluidströmung (FS1, FS2) betreffenden Strömungsparameter und/oder
-- in wenigstens einem die physikalischen Eigenschaften der jeweiligen Fluidströmung (FS1, FS2) betreffenden physikalischen Parameter unterscheiden und
- die erste und die zweite Fluidströmung (FS1, FS2) parallel nebeneinander strömen und aufgrund der unterschiedlichen Strömungsparameter und/oder aufgrund der unterschiedlichen physikalischen Parameter die Möglichkeit des Vermischens der Fluidströme (FS1, FS2) reduziert wird.

## Claims

1. Apparatus (1) for the additive manufacturing of three-dimensional objects (2) by successive, selective layer-by-layer exposure and thereby successive, selective layer-by-layer compacting of building material layers, consisting of building material (3) compactable by means of an energy beam (4), comprising a flow unit (11), which is arranged to embody a first fluid flow (FS1), which flows at least in sections along the at least one functions component of the apparatus (1) and
which can be loaded or is loaded with contaminations, specifically particulate contaminations arising in the course of the process, wherein
the flow unit (11) is arranged to embody a second fluid flow (FS2), wherein the second fluid flow (FS2) flows between the first fluid flow (FS1) and the at least one functions component of the apparatus (1) at least in sections, directly along the surface of the at least one functions component of the apparatus (1), **characterized in that**
- the first fluid flow (FS1) and the second fluid flow (FS2) differ in at least one flow parameter relating to the flow characteristics of the respective fluid flow (FS1, FS2) and/or
-- in at least one physical parameter relating to the physical characteristics of the respective fluid flow (FS1, FS2) -- and
- the first and second fluid flow (FS1, FS2) flow parallel next to each other and, based on the different flow parameters and/or based on the different physical parameters, the possibility of mixing the fluid flows (FS1, FS2) can be or is reduced.

2. Apparatus according to claim 1, **characterized in that** the flow apparatus (11) is arranged to embody a first and second fluid flow (FS1, FS2) flowing along one, in particular exposed, outer surface of the at least one functions component of the apparatus (1) and/or along an inner surface of the at least one functions component of the apparatus (1) or a further functions component of the apparatus (1)

3. Apparatus according to claim 2, **characterized in that** the functions component has a planar geometric form at least in sections, in particular in its entire expanse, or a cylindrical or cylinder-shaped geometric form at least in sections, in particular in its entire expanse, or a hollow cylindrical or hollow cylinder-shaped geometric form at least in sections, in particular in its entire expanse.

4. Apparatus according to one of the foregoing claims, **characterized in that** the or at least one functions component of the apparatus (1) is an in particular tubular or tube-shaped flow guidance element (12, 15) comprising one or at least one functions component of the apparatus (1), wherein the fluid flow (FS1, FS2) can flow through the interior flow chamber.

5. Apparatus according to one of the foregoing claims, **characterized in that** the or at least one functions component of the apparatus (1) is an optical element of an optical unit comprising a flow area, wherein the fluid flow (FS1, FS2) can flow through the interior flow chamber.

6. Apparatus according to one of the foregoing claims, **characterized in that** the or at least one functions component of the apparatus (1) is a process chamber wall (10a to 10c) confining a process chamber (10) of the apparatus (1).

7. Apparatus according to one of the foregoing claims, **characterized in that** the first fluid flow (FS1) and the second fluid flow (FS2) differ in at least a flow speed relating to the flow characteristics of the respective fluid flow (FS1, FS2).

8. Apparatus according to one of the foregoing claims, **characterized in that** the first fluid flow (FS1) and the second fluid flow (FS2) differ in at least a density relating to the physical characteristics of the respective fluid flow (FS1, FS2).

9. Apparatus according to one of the foregoing claims, **characterized in that** the flow unit (11) is arranged to form a second fluid flow (FS2), flowing like a helix or spiral directly along the surface of the at least one functions component of the apparatus (1).

10. Apparatus according to one of the foregoing claims, **characterized in that** a nozzle unit belonging to the flow unit (11) and comprising several nozzle elements, wherein at least a first nozzle element or at least one group of first nozzle elements is arranged to form the first fluid flow (F1) and at least a second nozzle element or at least a group of second nozzle elements is arranged to form the second fluid flow (FS2).

11. Apparatus according to claim 10, **characterized in that** the flow unit (11) is arranged to embody a fluid flow flowing in a circular flow along at least one functions component (1), wherein the respective first and second nozzle element or the respective first and second nozzle element groups are arranged or embodied on the same or different sections of the flow circulation formed by the fluid flow flowing in a circular flow.

12. Apparatus according to one of the foregoing claims, **characterized in that** the first and second fluid flow (FS1, FS2) are inert.

13. Method to operate an apparatus (1) for the additive manufacturing of three-dimensional objects (2) by successive, selective layer-by-layer exposure and thereby successive, selective layer-by-layer compacting of building material layers, consisting of building material (3) compactable by means of an energy beam (4), wherein a first fluid flow (FS1) formed by a flow unit (11) flows, in particular in a circular flow, along at least one functions component of the apparatus (1), wherein the first fluid flow (FS1) is loaded with contaminations, specifically particulate contaminations, arising in the course of the process, wherein a second fluid flow (FS2) is formed additionally by the flow unit (11), wherein the second fluid flow (FS2) flows in between the first fluid flow (FS1) and the at least one functions component of the apparatus (1), directly along the surface of the at least one functions component of the apparatus (1), **characterized in that**
- the first fluid flow (FS1) and the second fluid flow (FS2) differ in at least one flow parameter relating to the flow characteristics of the respective fluid flow (FS1, FS2) and/or
-- in at least one physical parameter relating to the physical characteristics of the respective fluid flow (FS1, FS2) -- and
- the first and second fluid flow (FS1, FS2) flow parallel next to each other and, based on the different flow parameters and/or based on the different physical parameters, the possibility of mixing the fluid flows (FS1, FS2) is reduced.

14. Process for protecting a functions component of an apparatus (1) according to one of the foregoing claims 1 to 12, from contaminations, in specific from particulate contaminations adhering to it, in particular in the area of a surface, wherein the first fluid flow (FS1) flows in a circular flow along the functions component, wherein the first fluid flow (FS1) is loaded in specific with particulate contaminations, wherein
a second fluid flow (FS2) is embodied additionally,
wherein the second fluid flow (FS2) flows in between the first fluid flow (FS1) and the at least one functions component, directly along the surface of the at least one functions component, **characterized in that**
- the first fluid flow (FS1) and the second fluid flow (FS2) differ -- in at least one flow parameter relating to the flow characteristics of the respective fluid flow (FS1, FS2) and/or
-- in at least one physical parameter relating to the physical characteristics of the respective fluid flow (FS1, FS2) -- and
- the first and second fluid flow (FS1, FS2) flow parallel next to each other and, based on the different flow parameters and/or based on the different physical parameters, the possibility of mixing the fluid flows (FS1, FS2) is reduced.

## Revendications

1. Dispositif (1) de fabrication additive d'objets tridimensionnels (2) par éclairage successif couche par couche et ainsi solidification sélective concomitante couche par couche successive de couches de matériau de construction à partir d'un matériau de construction (3) solidifiable au moyen d'un rayon d'énergie (4), comprenant un dispositif d'écoulement (11) conçu pour la formation d'un premier écoulement de fluide (FS1) s'écoulant au moins partiellement le long d'au moins un des composants fonctionnels du
dispositif (1), chargé ou pouvant être chargé d'impuretés se formant dans les conditions de procédé, en particulier particulaires, où
le dispositif d'écoulement (11) est conçu pour former un second écoulement de fluide (FS2), le second écoulement de fluide (FS2) s'écoulant au moins partiellement entre le premier écoulement de fluide (FS1) et l'au moins un composant fonctionnel du dispositif (1), immédiatement le long de la surface de l'au moins un composant fonctionnel du dispositif (1), **caractérisé en ce que**
- le premier écoulement de fluide (FS1) et le second écoulement de fluide (FS2) se distinguent par au moins un paramètre d'écoulement affectant les propriétés d'écoulement de l'écoulement de fluide respectif (FS1, FS2), et/ou par au moins un paramètre physique affectant les propriétés physiques de l'écoulement de fluide respectif (FS1, FS2), et
- le premier et le second écoulement de fluide (FS1, FS2) s'écoulent parallèlement l'un de l'autre et la possibilité de mélange des écoulements de fluide (FS1, FS2) est ou peut être réduite du fait des différents paramètres d'écoulement et/ou du fait des différents paramètres physiques.

2. Dispositif selon la revendication 1, **caractérisé en ce que** le dispositif d'écoulement (11) est conçu pour former un permier et un second écoulement de fluide (FS1, FS2) qui s'écoulent le long d'une surface externe, en particulier exposée, de l'au moins un composant fonctionnel du dispositif (1), et/ou le long d'une surface interne de l'au moins un composant fonctionnel du dispositif (1) ou d'un autre composant fonctionnel du dispositif.

3. Dispositif selon la revendication 2, **caractérisé en ce que** le composant fonctionnel présente au moins partiellement, en particulier complètement, une forme géométrique plane, ou au moins partiellement, en particulier complètement, une forme géométrique cylindrique, ou au moins partiellement, en particulier complètement, une forme géométrique en cylindre creux.

4. Dispositif selon l'une des revendications précédentes, **caractérisé en ce que** l'au moins un ou au moins un composant fonctionnel du dispositif (1) est un élément guide d'écoulement (12, 15) comprenant un espace interne d'écoulement, en particulier tubulaire, l'espace interne d'écoulement pouvant être traversé par l'écoulement de fluide (FS1, FS2).

5. Dispositif selon l'une des revendications précédentes, **caractérisé en ce que** l'au moins un ou au moins un composant fonctionnel du dispositif (1) est un élément optique d'un dispositif optique comprenant une surface d'écoulement, la surface d'écoulement pouvant être traversée par l'écoulement de fluide (FS1, FS2).

6. Dispositif selon l'une des revendications précédentes, **caractérisé en ce que** l'au moins un ou au moins un composant fonctionnel du dispositif (1) est une paroi de chambre de procédé (10a - 10c) délimitant une chambre de procédé (10) du dispositif (1).

7. Dispositif selon l'une des revendications précédentes, **caractérisé en ce que** le premier écoulement de fluide (FS1) et le second écoulement de fluide (FS2) se distinguent par au moins une vitesse d'écoulement affectant les propriétés d'écoulement de l'écoulement de fluide respectif (FS1, FS2).

8. Dispositif selon l'une des revendications précédentes, **caractérisé en ce que** le premier écoulement de fluide (FS1) et le second écoulement de fluide (FS2) se distinguent par au moins une densité affectant les propriétés physiques de l'écoulement de fluide respectif (FS1, FS2).

9. Dispositif selon l'une des revendications précédentes, **caractérisé en ce que** l'au moins le dispositif d'écoulement (11) est conçu pour former un second écoulement de fluide (FS2) s'écoulant en hélice ou en spirale immédiatement le long de la surface de l'au moins un composant fonctionnel du dispositif (1).

10. Dispositif selon l'une des revendications précédentes, **caractérisé par** un dispositif de buse comprenant plusieurs buses respectives du dispositif d'écoulement (11), au moins un premier élément de buse ou au moins un groupe de premiers éléments de buse étant conçu pour former le premier écoulement de fluide (FS1), et au moins un second élément de buse ou au moins un groupe de seconds éléments de buse étant conçu pour former le second écoulement de fluide (FS2).

11. Dispositif selon la revendication 10, **caractérisé en ce que** le dispositif d'écoulement (11) est conçu pour former un écoulement de fluide s'écoulant de façon circulaire le long d'au moins un composant fonctionnel du dispositif (1), le premier et le second élément de groupe ou resp. le premier et le second groupe d'éléments de buse étant disposés ou constitués au niveau de sections identiques ou différentes du cycle d'écoulement formé par l'écoulement de fluide s'écoulant de façon circulaire.

12. Dispositif selon l'une des revendications précédentes, **caractérisé en ce que** le premier et le second écoulement de fluide (FS1, FS2) sont inertes.

13. Procédé de fonctionnement d'un dispositif (1) de fabrication additive d'objets tridimensionnels (2) par éclairage successif couche par couche et ainsi solidification sélective concomitante couche par couche successive de couches de matériau de construction à partir d'un matériau de construction (3) solidifiable au moyen d'un rayon d'énergie (4), un premier écoulement de fluide (FS1) formé sur un dispositif d'écoulement (11) s'écoulant en particulier de façon circulaire, le long d'au moins d'un composant fonctionnel du dispositif (1), le premier écoulement de fluide (FS1) étant chargé d'impuretés se formant dans les conditions de procédé, en particulier particulaires, où un second écoulement de fluide (FS2) est formé en plus sur le dispositif d'écoulement (11) le second écoulement de fluide (FS2) s'écoulant entre le premier écoulement de fluide (FS1) et l'au moins un composant fonctionnel du dispositif (1), immédiatement le long de la surface de l'au moins un composant fonctionnel du dispositif (1), **caractérisé en ce que**
- le premier écoulement de fluide (FS1) et le second écoulement de fluide (FS2) se distinguent par au moins un paramètre d'écoulement affectant les propriétés d'écoulement de l'écoulement de fluide respectif (FS1, FS2), et/ou par au moins un paramètre physique affectant les propriétés physiques de l'écoulement de fluide respectif (FS1, FS2), et
- le premier et le second écoulement de fluide (FS1, FS2) s'écoulent parallèlement l'un de l'autre et la possibilité de mélange des écoulements de fluide (FS1, FS2) est réduite du fait des différents paramètres d'écoulement et/ou du fait des différents paramètres physiques.

14. Procédé de protection d'un composant fonctionnel d'un dispositif (1) selon l'une des revendications 1 à 12, contre les impuretés, en particulier particulaires, adhérant à celui-ci, en particulier dans la zone d'une surface, un premier écoulement de fluide (FS1) s'écoulant en particulier de façon circulaire le long du composant fonctionnel, où le premier écoulement de fluide (FS1) est chargé d'impuretés, en particulier particulaires, où
un second écoulement de fluide (FS2) est formé en plus,
le second écoulement de fluide (FS2) s'écoulant entre le premier écoulement de fluide (FS1) et l'au moins un composant fonctionnel immédiatement le long de la surface de l'au moins un composant fonctionnel, **caractérisé en ce que**
- le premier écoulement de fluide (FS1) et le second écoulement de fluide (FS2) se distinguent par au moins un paramètre d'écoulement affectant les propriétés d'écoulement de l'écoulement de fluide respectif (FS1, FS2), et/ou
par au moins un paramètre physique affectant les propriétés physiques de l'écoulement de fluide respectif (FS1, FS2), et
- le premier et le second écoulement de fluide (FS1, FS2) s'écoulent parallèlement l'un de l'autre et la possibilité de mélange des écoulements de fluide (FS1, FS2) est réduite du fait des différents paramètres d'écoulement et/ou du fait des différents paramètres physiques.
